# EUROPÄISCHE PATENTSCHRIFT

(11) **EP 2 192 339 B1**
(45) Veröffentlichungstag und Bekanntmachung des Hinweises auf die Patenterteilung: **17.04.2013**
(21) Anmeldenummer: 09173588.6
(22) Anmeldetag: 21.10.2009
(51) Int. Cl.: F16L 47/02, F16L 39/00

(54) **Leitungsanordnung für ein unter Druck stehendes Fluid und Verfahren zu deren Herstellung**
Cable assembly for a pressurised fluid and method for producing same
Dispositif de conduite pour un fluide sous pression et son procédé de fabrication

(30) Priorität: 26.11.2008 DE 102008059087
(43) Veröffentlichungstag der Anmeldung: 02.06.2010
(73) Patentinhaber: VERITAS AG, 63571 Gelnhausen (DE)
(72) Erfinder: Mai, Sven, 63589, Linsengericht (DE); Grasmück, Thomas, 63549, Ronneburg (DE); Van Hooren, Marc, 63579, Freigericht-Bernbach (DE); Eisenacher, Roland, 63639, Flörsbachtal (DE); Kahn, Peter, 63526, Erlensee (DE)
(74) Vertreter: Witte, Weller & Partner

(56) Entgegenhaltungen:
- EP-A1- 0 751 024
- EP-A2- 0 203 672
- WO-A1-03/072988
- FR-A1- 2 911 942
- US-A- 4 482 172
- US-A- 5 354 101
- US-A1- 2004 080 155
- US-A1- 2004 201 212

## Beschreibung

Die vorliegende Erfindung betrifft eine Leitungsanordnung für ein unter Druck stehendes Fluid, insbesondere zur Verbindung eines Getriebes mit einem Ölkühler, mit einer ersten Fluidleitung und mit einer zweiten Fluidleitung, die mittels einer Verbindungsanordnung mit einem Gehäuse, wie einem Getriebegehäuse, verbindbar sind.

Die Erfindung betrifft ferner ein Verfahren zur Herstellung einer solchen Leitungsanordnung.

Zur Verbindung eines Getriebes mit einem Ölkühler ist es bekannt, eine Leitungsanordnung zu verwenden, die einen flexiblen Abschnitt und einen starren Abschnitt aufweist. Der flexible Abschnitt wird zur Aufnahme von Schwingungen benötigt, da das Getriebe in der Karosserie eines Fahrzeugs generell elastisch aufgehängt ist und daher gegenüber der Karosserie schwingen kann. Der Ölkühler wird hingegen generell karosseriefest eingebaut. Die Relativbewegungen zwischen dem Getriebe und dem Ölkühler können dabei von dem flexiblen Abschnitt aufgenommen werden. Für den starren Abschnitt werden generell Metallleitungen verwendet, insbesondere auf Aluminiumbasis. Der flexible bzw. elastische Abschnitt wird in der Regel durch Schläuche aus elastomeren Materialien gebildet. Diese Schläuche sind bevorzugt als Schrumpfschläuche ausgebildet.

Die starren Leitungen werden dabei an dem Gehäuse festgelegt, und zwar mittels einer Verbindungsanordnung, die aufgrund der eingeleiteten Kräfte aus einer aufwändigen Gusskonstruktion aus Metall gebildet ist. Diese Verbindungsanordnung weist dabei zwei Anschlussstutzen für den Vor- und den Rücklauf sowie einen Befestigungspunkt zur Anbindung an das Gehäuse auf.

Die Verbindungsanordnung und die starren Fluidleitungen sind häufig kraftschlüssig miteinander verbunden. Ferner wird eine Verbindung zwischen den starren Metallleitungen und den flexiblen Schlauchleitungen in der Regel durch Adapterelemente realisiert, die aufgrund ihres Aufbaus eine Durchmesserreduktion von über 20 % zur Folge haben können.

Auf der Seite des Ölkühlers sind die Fluidleitungen in der Regel durch Steckverbinder an das Ölkühlergehäuse angeschlossen. Diese Steckverbinder sind mit den Fluidleitungen durch eine kraftschlüssige Verbindung verbunden.

Die oben beschriebene relativ aufwändige Konstruktion wird auch deswegen gewählt, weil in derartigen Leitungsanordnungen Dauertemperaturbelastungen von 130°C auftreten können, wobei Spitzentemperaturen bis 180°C betragen können. Ferner kann das in den Fluidleitungen geführte Fluid einen Druck bis zu 10 bar aufweisen. Ferner wird aufgrund der Einbausituation eine gewisse Schlagfähigkeit und Zinkchloridbeständigkeit gefordert.

Der Aufbau einer solchen Leitungsanordnung ist aufgrund der Vielzahl von Einzelteilen komplex. Die zum Zusammenbau notwendigen Arbeitsschritte sind relativ kostenintensiv. Zudem ist das Gewicht der Leitungsanordnung vergleichsweise hoch. Dies ist auch aufgrund der im Fahrbetrieb auftretenden Schwingungen von besonderem Nachteil. Eine solche Leitungsanordnung wird beispielsweise in Dokument US 2004/0080155 gezeigt.

Demgegenüber ist es eine Aufgabe der Erfindung, eine verbesserte Leitungsanordnung sowie ein verbessertes Verfahren zur Herstellung einer solchen Leitungsanordnung anzugeben.

Diese Aufgabe wird durch eine Leitungsanordnung nach Anspruch 1 gelöst.

Die obige Aufgabe wird ferner gelöst durch ein Kraftfahrzeug mit einer solchen Leitungsanordnung und durch ein Verfahren zur Herstellung einer Leitungsanordnung, insbesondere einer Leitungsanordnung der oben genannten Art, mit den Schritten:
- Bereitstellen eines ersten Verbindungsteils aus thermoplastischem Kunststoff,
- Bereitstellen einer ersten Fluidleitung aus thermoplastischem Kunststoff, und
- stoffschlüssiges Verbinden des ersten Verbindungsteils und der ersten Fluidleitung durch Reibschweißen.

Bei der erfindungsgemäßen Leitungsanordnung sind das Kunststoff-Verbindungsteil und die Kunststoff-Fluidleitung stoffschlüssig miteinander verbunden. Demzufolge ist die Leitungsanordnung mit wenigen Einzelbauteilen zu realisieren. Die stoffschlüssige Verbindung vermeidet zudem Dichtheitsprobleme. Aufgrund der Verwendung des Kunststoffmaterials kann die Leitungsanordnung mit einem geringen Gewicht realisiert werden.

Die stoffschlüssige Fügeverbindung des Kunststoff-Verbindungsteils und der Kunststoff-Fluidleitung kann generell auf beliebige Art und Weise erfolgen, insbesondere wenn hierbei die stoffschlüssige Verbindung für die umlaufende Dichtheit zwischen Fluidleitung und Durchgangskanal sorgt.

Hierdurch sind zusätzliche Sicherungsmittel, wie mechanische Befestigungsmittel oder Klebstoffe, nicht erforderlich. Die Dichtheit an den Fügestellen kann langfristig gewährleistet werden. Zudem können unerwünschte Kerbwirkungen an den Fügestellen aufgrund mechanischer Belastungen vermieden werden. Gegenüber einer kraftschlüssigen Verbindung können derartige stoffschlüssige Verbindungen die bei der Verwendung als Getriebeölkühlerleitungen auftretenden Druck- und Temperaturbelastungen aufnehmen.

Da die Fluidleitung und das Kunststoff-Verbindungsteil bevorzugt separat voneinander hergestellt werden, ist es bevorzugt, diese Elemente durch Reibschweißen miteinander zu verbinden.

Gemäß einer weiteren bevorzugten Ausführungsform, die unabhängig von der stoffschlüssigen Verbindung des Verbindungsteils und der Fluidleitung sowie unabhängig von deren Herstellung aus Kunststoff eine eigene Erfindung darstellt, weisen die Verbindungsteile jeweils wenigstens einen Gehäuseanschlussabschnitt, wenigstens einen Leitungsanschlussabschnitt, der mit dem Gehäuseanschlussabschnitt über den Durchgangskanal verbunden ist, sowie wenigstens einen Befestigungsabschnitt auf, wobei die Befestigungsabschnitte derart aneinander angepasst bzw. miteinander ausrichtbar sind, dass die Verbindungsteile mittels eines einzelnen Befestigungselementes an dem Gehäuse befestigbar sind.

Insbesondere dann, wenn das Verbindungsteil und die Fluidleitung durch Reibschweißen miteinander verbunden werden, tritt während dieses Fügeprozesses eine Relativrotation zwischen diesen Elementen auf. Demgemäß ist jede Fluidleitung mit einem eigenen Verbindungsteil verbunden. Aufgrund der Anpassung der Verbindungsteile aneinander ist die Montage mittels eines einzelnen Befestigungselementes dennoch möglich, so dass der Montageaufwand nach wie vor gering gehalten werden kann.

Dabei ist es von besonderem Vorteil, wenn wenigstens eines der Verbindungsteile zwischen dem Gehäuseanschlussabschnitt und dem Befestigungsabschnitt wenigstens einen die Biegesteifigkeit erhöhenden Steg aufweist.

Hierdurch kann die Dichtheit zwischen dem Gehäuseanschlussabschnitt und dem Gehäuse auch dann gewährleistet werden, wenn Fluid mit relativ hohem Druck geführt wird. Mit anderen Worten kann vermieden werden, dass der Gehäuseanschlussabschnitt aufgrund eines solchen Druckes gegenüber dem Gehäuse abhebt.

Ferner ist es hierbei bevorzugt, wenn eine Anschlussachse des Gehäuseanschlussabschnittes von wenigstens einem der Verbindungsteile parallel zu einer Befestigungsachse des zugehörigen Befestigungsabschnittes ausgerichtet ist.

Dies ermöglicht eine optimierte Kraftwirkung des Befestigungsabschnittes auf dem Gehäuseanschlussabschnitt.

Gemäß einer weiteren bevorzugten Ausführungsform ist eine Leitungsachse des Leitungsanschlussabschnittes von wenigstens einem der Verbindungsteile winklig zu einer Anschlussachse des zugehörigen Gehäuseanschlussabschnittes ausgerichtet.

Hierdurch kann die Verbindungsanordnung bauraumoptimiert gestaltet werden, insbesondere in einer Richtung senkrecht zur Gehäuseoberfläche. Dabei versteht sich, dass der Durchgangskanal, der den Leitungsanschlussabschnitt und den Gehäuseanschlussabschnitt verbindet, in diesem Fall gekrümmt ausgebildet ist. Bei dieser Ausgestaltung ist es bei der Leitung von Fluid, das unter Druck steht, von noch größerer Bedeutung, dass die Biegesteifigkeit des Verbindungsteils zwischen dem Gehäuseanschlussabschnitt und dem Befestigungsabschnitt optimiert ist.

Unter einer winkligen Ausrichtung wird generell ein Winkel der Achsen im Bereich von größer 0° und kleiner 90° verstanden, insbesondere größer 30° und kleiner 80°.

Von besonderem Vorzug ist es ferner, wenn die Leitungsachse auch winklig zu einer Verbindungsebene zwischen der Befestigungsachse und der Anschlussachse ausgerichtet ist.

In diesem Fall ist es möglich, die Leitungsachsen der zwei Verbindungsteile in einem an dem Gehäuse montierten Zustand im Wesentlichen parallel miteinander auszurichten.

Ferner ist es insgesamt bevorzugt, wenn eines der Verbindungsteile einen Vorsprung und das andere Verbindungsteil eine Aussparung aufweist, in die der Vorsprung greift.

Durch diese Maßnahme ist es möglich, die Verbindungsteile zumindest temporär so miteinander auszurichten und aneinander festzulegen, dass die Festlegung der Verbindungsteile an dem Gehäuse mittels eines einzelnen Befestigungselementes einfach möglich ist.

Ferner ist es durch diese Ausgestaltung ggf. möglich, die relative Lage der Verbindungsteile vorab zu definieren. Insgesamt können auf diese Weise der Montageaufwand und die Montagesicherheit optimiert werden.

Es ist insgesamt ferner vorteilhaft, wenn wenigstens eine der Fluidleitungen von der Verbindungsanordnung bis hin zu einer Anschlussanordnung, mittels der die Fluidleitung an ein weiteres Gehäuse, wie einen Ölkühler, anschließbar ist, durchgehend aus einem einheitlichen Kunststoffmaterial hergestellt ist.

Zum einen wird hierdurch der bevorzugt durchgeführte Reibschweißprozess zum Verbinden mit den jeweiligen Verbindungsteilen leichter realisierbar.

Von besonderem Vorteil ist es dabei, wenn das Kunststoffmaterial ein wärmebeständiger und druckbelastbarer thermoplastischer Kunststoff ist.

Bei dem erfindungsgemäßen Verfahren zur Herstellung einer Leitungsanordnung ist es von besonderem Vorzug, wenn in dem Reibschweißschritt das Verbindungsteil um eine Leitungsachse herum rotiert wird.

Eine zum Reibschweißen eingerichtete Relativrotation zwischen dem Verbindungsteil und der Fluidleitung könnte zwar auch dadurch realisiert werden, dass die Fluidleitung relativ zu dem Verbindungsteil rotiert wird.

Die bevorzugte Ausführungsform, bei der das Verbindungsteil in Rotation versetzt wird, ermöglicht die Anwendung des Reibschweißverfahrens auch dann, wenn die Verbindungsleitungen komplexe Formen im dreidimensionalen Raum aufweisen.

Zudem kann hierbei erreicht werden, dass die Fluidleitungen bezogen auf den Drehwinkel positionsgenau mit dem Verbindungsteil verbunden werden. Demzufolge kann das Verbindungsteil in die komplexe dreidimensionale Form der Fluidleitung integriert werden.

Von Vorteil ist es bei dem erfindungsgemäßen Verfahren ferner, daß ein zweites Verbindungsteil ebenfalls durch Reibschweißen mit einer zweiten Fluidleitung verbunden wird und wenn das erste und das zweite Verbindungsteil derart zusammengesetzt werden, dass sie mittels eines einzelnen Befestigungselementes an einem Gehäuse befestigbar sind.

Ausführungsbeispiele der Erfindung sind in der Zeichnung dargestellt und werden in der nachfolgenden Beschreibung näher erläutert. Es zeigen:
- Figur 1: eine schematische Darstellung eines Kraftfahrzeuges mit einem Antriebsstrang, bei dem ein Getriebe mit einem Ölkühler über eine Leitungsanordnung verbunden ist;
- Figur 2: eine perspektivische Darstellung einer bevorzugten Ausführungsform einer erfindungsgemäßen Leitungsanordnung;
- Figur 3: eine schematische Darstellung einer Verbindungsanordnung einer erfindungsgemäßen Leitungsanordnung;
- Figur 4: eine Draufsicht auf die Verbindungsanordnung der Leitungsanordnung der Figur 2;
- Figur 5: eine perspektivische Ansicht eines Verbindungsteils der Verbindungsanordnung der Figur 4;
- Figur 6: eine perspektivische Anordnung eines weiteren Verbindungsteils der Verbindungsanordnung der Figur 4;
- Figur 7: eine Seitenansicht des Verbindungsteils der Figur 5;
- Figur 8: eine Draufsicht auf das Verbindungsteil der Figur 5;
- Figur 9: eine Seitenansicht des Verbindungsteils der Figur 6; und
- Figur 10: eine Draufsicht auf das Verbindungsteil der Figur 6.

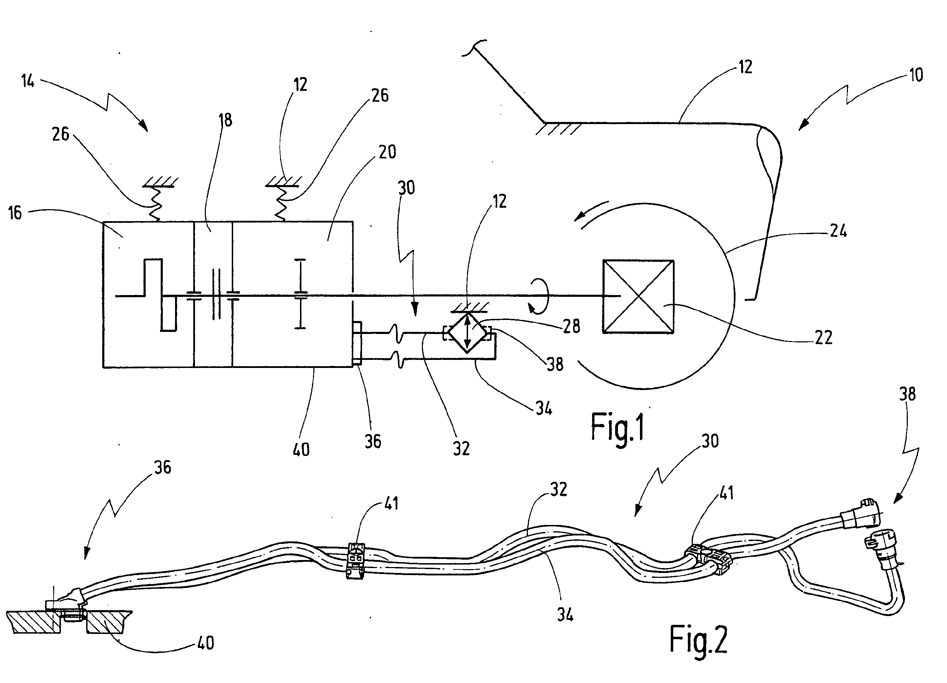

In Figur 1 ist ein schematisch dargestelltes Kraftfahrzeug generell mit 10 bezeichnet. Das Kraftfahrzeug 10 weist eine Karosserie 12 und einen Antriebsstrang 14 auf. Der Antriebsstrang 14 beinhaltet einen Antriebsmotor 16, eine Kupplung 18 und ein Getriebe 20. Ein Ausgang des Getriebes 20 ist mit einem Differential 22 verbunden, dessen Ausgangsglieder mit angetriebenen Rädern 24 des Kraftfahrzeuges 10 verbunden sind.

Das Getriebe 20 und der Antriebsmotor 16 sind in Bezug auf die Karosserie 12 elastisch gelagert, um zu vermeiden, dass Vibrationen auf die Karosserie 12 übertragen werden.

Zur Kühlung von Öl in dem Getriebe 20 ist ein separater Ölkühler 28 vorgesehen, der starr in Bezug auf die Karosserie 12 befestigt ist. Zur Verbindung des Getriebes 20 mit dem Ölkühler 28 ist eine Leitungsanordnung 30 vorgesehen, die eine erste Fluidleitung 32 (z.B. für den Vorlauf) und eine zweite Fluidleitung 34 (z.B. für den Rücklauf) beinhaltet. Ferner weist die Leitungsanordnung 30 eine Verbindungsanordnung 36 auf, mittels der die zwei Fluidleitungen 32, 34 mit einem Gehäuse 40 des Getriebes 20 dichtend verbunden sind. Schließlich weist die Leitungsanordnung 30 eine Anschlussanordnung 38 auf, mittels der die Fluidleitungen 32, 34 dichtend mit dem Ölkühler 28 verbunden sind.

In Figur 1 ist schematisch dargestellt, dass die Fluidleitungen 32, 34 eine gewisse Elastizität haben müssen, um zu verhindern, dass Vibrationen von dem Antriebsstrang 14 auf den Ölkühler 28 übertragen werden

In Figur 2 ist eine Leitungsanordnung 30 gezeigt, die sich für den oben genannten Einsatzzweck eignet. Die Leitungsanordnung 30 beinhaltet eine erste Fluidleitung 32 und eine zweite Fluidleitung 34, die jeweils aus einem homogenen Kunststoffmaterial hergestellt sind, insbesondere einem wärmebeständigen und druckbelastbaren thermoplastischen Kunststoff (z.B. ein Copolyamid). Unter wärmebeständig wird vorliegend verstanden, dass die Fluidleitungen Temperaturen von wenigstens 120°, insbesondere 180°, und Drücken von wenigstens 5 bar, insbesondere 10 bar, widerstehen können.

Die Leitungsanordnung 30 weist ferner eine Verbindungsanordnung 36 auf, die zwei einzelne Verbindungsteile beinhaltet, die nachstehend beschrieben werden. Die Verbindungsanordnung 36 ist dazu ausgelegt, die Fluidleitungen 32, 34 dichtend an einem Gehäuse 40, wie einem Getriebegehäuse, festzulegen.

Ferner weist die Leitungsanordnung 30 eine Anschlussanordnung 38 auf, die für jede der zwei Fluidleitungen 32, 34 einen Quick-Konnektor beinhaltet. Die Quick-Konnektoren ermöglichen eine einfache Montage an dem Ölkühler und sind vorzugsweise aus einem Kunststoffmaterial hergestellt und mit den Fluidleitungen 32, 34 kraftschlüssig verbunden, beispielsweise durch Einschlagen der Quick-Konnektoren in die jeweilige Fluidleitung 32, 34.

In Figur 2 sind ferner zwei Halteklammern 41 gezeigt, die die zwei Fluidleitungen 32, 34 im Bereich zwischen der Verbindungsanordnung 36 und der Anschlussanordnung 38 relativ zueinander fixieren. Diese Halteklammern 41 können beispielsweise durch Spritzgussteile aus Kunststoff realisiert sein und sind vorzugsweise lösbar an den Fluidleitungen 32, 34 festgelegt.

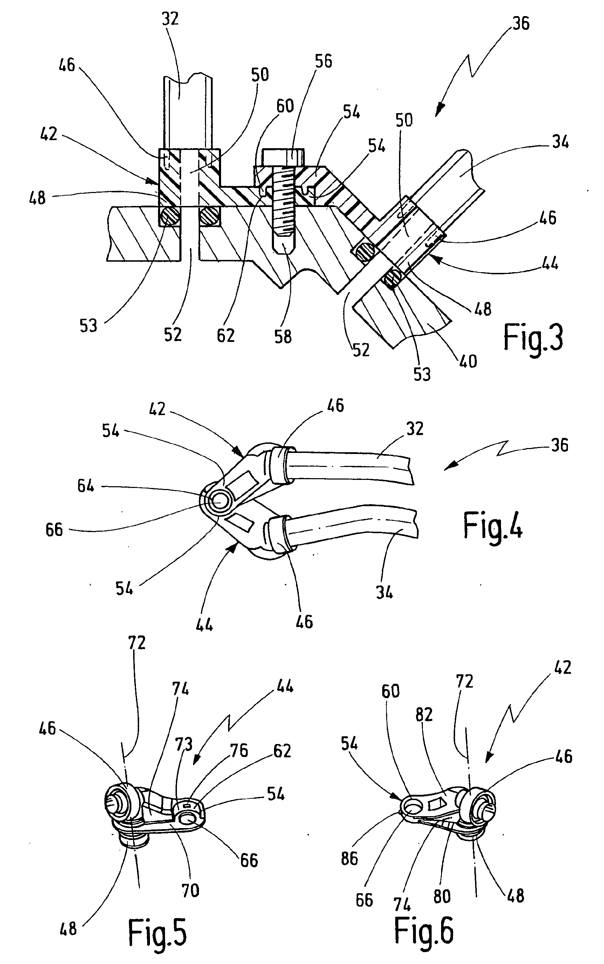

In Figur 3 ist in schematischer Form eine Verbindungsanordnung 36 für eine Leitungsanordnung 30 gezeigt.

Die Verbindungsanordnung 36 beinhaltet ein erstes Verbindungsteil 42 und ein zweites Verbindungsteil 44, die jeweils aus einem thermoplastischen Kunststoff hergestellt sind, und zwar vorzugsweise im Spritzgussverfahren.

Die Verbindungsteile 42, 44 weisen jeweils einen Leitungsanschlussabschnitt 46 auf, an denen die Verbindungsteile 42, 44 mit je einer der Fluidleitungen 32, 34 verbunden sind. Die Verbindung zwischen den Leitungsanschlüssen 46 und dem Fluidleitungen 32, 34 ist eine stoffschlüssige Verbindung. Besonders bevorzugt ist es, wenn die stoffschlüssige Verbindung durch Reibschweißen hergestellt ist.

Die Verbindungsteile 42, 44 weisen ferner jeweils einen Gehäuseanschlussabschnitt 48 auf, der mit dem jeweiligen Leitungsanschlussabschnitt 46 über einen durchgehenden Innenkanal 50 verbunden ist. Die Gehäuseanschlussabschnitte 48 stellen eine Fluidverbindung zwischen dem zugeordneten Innenkanal 50 und einer Öffnung 52 in dem Gehäuse 40 her. Diese Verbindung ist abzudichten, was in Figur 3 schematisch durch Dichtungsringe 53 dargestellt ist.

Ferner weisen die Verbindungsteile 42, 44 jeweils einen Befestigungsabschnitt 54 auf, der sich seitlich von dem Gehäuseanschlussabschnitt 48 erstreckt. Die Befestigungsabschnitte 54 der Verbindungsteile 42, 44 sind so miteinander ausgerichtet, dass sie mittels eines einzelnen Verbindungselementes 56 (beispielsweise in Form einer Schraube) an dem Gehäuse 40 festlegbar sind. Zu diesem Zweck kann an dem Gehäuse 40 eine Sacklochbohrung 58 vorgesehen sein.

Ferner ist an dem einen Befestigungsabschnitt 54 ein Vorsprung 60 vorgesehen, der in eine entsprechende Aussparung 62 des anderen Befestigungsabschnittes 54 greift. Hierdurch kann die Relativlage zwischen den Befestigungsabschnitten 54 vor der Montage an dem Gehäuse 40 definiert und ggf. temporär fixiert werden.

Bei der Verbindungsanordnung 36 der Figur 3 sind die Fluidleitungen 32, 34 jeweils axial mit den zugeordneten Gehäuseanschlussabschnitten 48 und Öffnungen 52 ausgerichtet, jedoch winklig zueinander angeordnet. Bevorzugt ist jedoch eine Variante, bei der sich die Fluidleitungen 32, 34 zu dem Gehäuse 40 hin unter einem spitzen Winkel von kleiner 90° in Bezug auf eine Oberfläche des Gehäuses 40 erstrecken, wie es in Figur 2 schematisch dargestellt ist.

Die Verbindungsanordnung 36 der Leitungsanordnung 30 der Figur 2 ist in Figur 4 in einer Draufsicht dargestellt. Die Verbindungsanordnung 36 entspricht hinsichtlich ihrer Funktionsweise der Verbindungsanordnung 36 der Figur 3, so dass gleiche Elemente mit gleichen Bezugsziffern bezeichnet sind. Im Folgenden wird lediglich auf die Unterschiede eingegangen.

Man erkennt in Figur 4, dass die zwei Fluidleitungen 32, 34 annähernd parallel auf die Verbindungsanordnung 36 zugeführt werden, so dass die Leitungsanschlussabschnitte 46 etwa parallel miteinander ausgerichtet sind.

In Figur 4 ist ferner gezeigt, dass der Befestigungsabschnitt 54 des Verbindungsteils 42 über dem Befestigungsabschnitt 54 des Verbindungsteils 44 liegt, wobei die Befestigungsabschnitte 54 eine gemeinsame Durchgangsöffnung 66 zur Aufnahme einer Schraube definieren. In dem Befestigungsabschnitt 54 des oberen Verbindungselementes 42 ist zudem eine Öse 64 eingesetzt, die vorzugsweise aus einem harten Werkstoff, wie Metall, hergestellt ist, und die Durchgangsöffnung definiert.

In den Figuren 5 bis 10 sind die Verbindungsteile 42, 44 in größerer Genauigkeit dargestellt.

Das in den Figuren 5 sowie 7 und 8 gezeigte Verbindungsteil 44 weist eine Grundplatte 70 auf, die sich zwischen dem Befestigungsabschnitt 54 und dem Gehäuseanschlussabschnitt 48 erstreckt. Der Gehäuseanschlussabschnitt 48 erstreckt sich von der Grundplatte 70 nach unten, und zwar entlang einer Anschlussachse 72. Der Leitungsanschlussabschnitt 46 erstreckt sich von der Grundplatte 70 nach oben.

Der Befestigungsabschnitt 54 weist einen sich um die Durchgangsöffnung 66 herum erstreckenden, nach oben vorstehenden Randabschnitt auf, der im Querschnitt etwa halbkreisförmig gebildet ist. Der Randabschnitt 73 bildet eine Aussparung 62 zur Aufnahme eines Vorsprunges 60 des anderen Verbindungsteils 42.

Ferner ist der Randabschnitt 73 über einen Steg 74 mit dem Leitungsanschlussabschnitt 46 verbunden, wobei sich der Steg 74 von der Grundplatte 70 nach oben erstreckt. Der Steg 74 erhöht die Biegesteifigkeit des Verbindungsteils 44 zwischen dem Befestigungsabschnitt 54 und dem Gehäuseanschlussabschnitt 48 (bzw. Leitungsanschlussabschnitt 46).

In Figur 5 ist bei 76 ferner eine Positionieröffnung 76 gezeigt, die in dem Randabschnitt 73 ausgebildet ist. Die Positionieröffnung 76 ist zur Aufnahme einer entsprechenden Nase ausgelegt, die an dem Vorsprung 60 des anderen Verbindungsteils 42 vorgesehen ist.

Das andere Verbindungsteil 42, das in den Figuren 6, 9 und 10 gezeigt ist, weist ebenfalls zwischen dem Befestigungsabschnitt 54 und dem Gehäuseanschlussabschnitt 48 eine Grundplatte 80 auf. Von der Grundplatte 80 erstreckt sich ein ringförmiger Vorsprung 60 des Befestigungsabschnittes 54 nach oben, in dessen Mitte eine Durchgangsöffnung ausgebildet ist (die zur Aufnahme der Hülse 64 ausgelegt ist). Von der Oberseite des Vorsprungs 60 erstreckt sich eine weitere Platte 82 hin zu dem Leitungsanschlussabschnitt 46. Zwischen der Grundplatte 80 und der weiteren Platte 82 sind ein oder mehrere Stege 84 ausgebildet, die die Biegesteifigkeit zwischen dem Befestigungsabschnitt 54 und dem Gehäuseanschlussabschnitt 48 (bzw. dem Leitungsanschlussabschnitt 46) erhöhen.

An dem Außenumfang des ringförmigen Vorsprunges 60 ist eine Positioniernase 86 ausgebildet.

Man erkennt ferner, dass die Leitungsanschlussabschnitte 46 beider Verbindungsteile 42, 44 jeweils einen Krümmerabschnitt 90 aufweisen, über den der Leitungsanschlussabschnitt 46 mit dem jeweiligen Gehäuseanschlussabschnitt 48 verbunden ist.

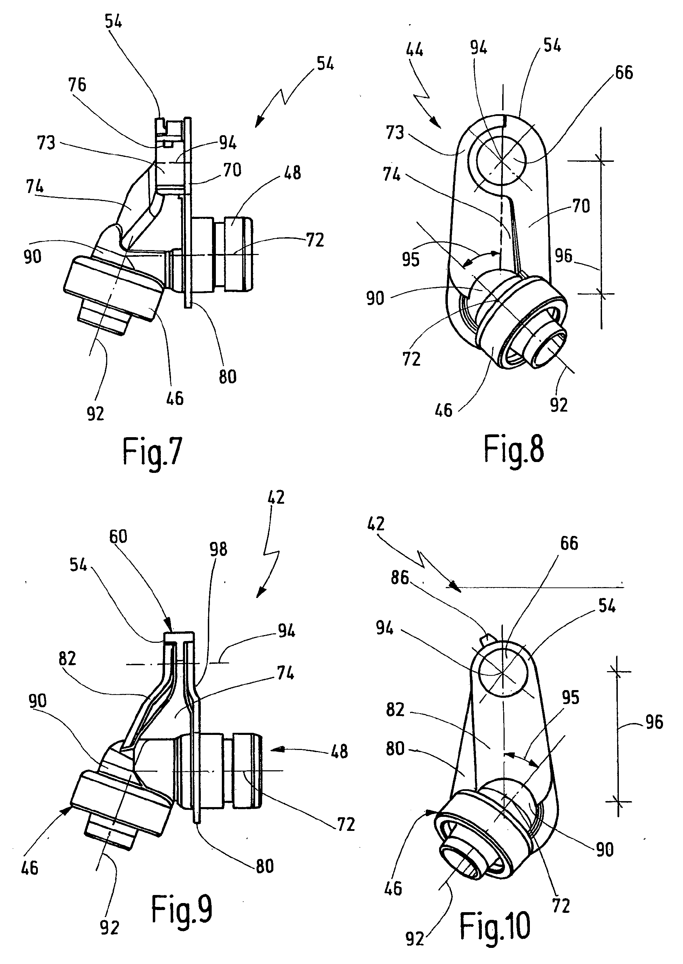

Während die Anschlussachsen 72 der Gehäuseanschlussabschnitte 48 jeweils parallel mit Befestigungsachsen 94 der Befestigungsabschnitte 54 ausgebildet sind, sind die Leitungsachsen 92 der Leitungsanschlussabschnitte 46 winklig hierzu ausgerichtet. Dabei ist in Figuren 7 und 9 zu erkennen, dass die Leitungsachsen 92 mit den Anschlussachsen 72 jeweils einen Winkel von größer 90° und vorzugsweise kleiner 180° einschließen, so dass die Leitungsachsen 92 mit einer Oberfläche des Gehäuses 40 im montierten Zustand einen spitzen Winkel einnehmen, wie es in Figur 2 gezeigt ist.

Ferner ist zu erkennen, dass die Leitungsachsen 92 jeweils winklig in Bezug auf eine Ebene ausgerichtet sind, die von der Befestigungsachse 94 und der Anschlussachse 72 aufgespannt ist. Dieser Winkel ist in den Figuren 8 und 10 jeweils mit 95 bezeichnet. Der Winkel 95 der zwei Verbindungsteile 42, 44 ist nicht notwendigerweise identisch, kann jedoch vorzugsweise in beiden Fällen im Bereich von 0° bis 180° liegen, besonders bevorzugt im Bereich von 20° bis 80°.

Durch die Einrichtung eines geeigneten Winkels 95 ist es möglich, die Leitungsanschlussabschnitte 46 etwa parallel auszurichten, wie es in Figur 4 gezeigt ist, wobei sich die Verbindungsteile 42, 44 von der Durchgangsöffnung 66 V-förmig erstrecken, vorzugsweise unter Einschluss eines Winkels im Bereich von 20° bis 150°, insbesondere im Bereich von 60° bis 120°.

In den Figuren 8 und 10 ist ferner der jeweilige Achsabstand 96 zwischen der Befestigungsachse 94 und der Anschlussachse 72 gezeigt. Diese Achsabstände 96 können bei den Verbindungsteilen 42, 44 identisch sein, können jedoch auch unterschiedlich zueinander sein. Der Achsabstand 96 liegt vorzugsweise im Bereich von 10 mm bis 100 mm, insbesondere im Bereich von 20 mm bis 70 mm.

Ferner ist in Figur 9 gezeigt, dass die Grundplatte 80 des Verbindungsteils 42 zwischen dem Gehäuseanschlussabschnitt 48 und dem Befestigungsabschnitt 54 gekröpft ausgebildet ist, so dass der hülsenförmige Vorsprung 60 des Befestigungsabschnittes 54 spannungsfrei auf die Grundplatte 70 des Befestigungsabschnittes 54 des anderen Verbindungsteils 44 aufgesetzt werden kann. Das Maß der Kröpfung entspricht dabei etwa der Dicke der Grundplatte 70.

Die Gehäuseanschlussabschnitte 48 sind vorzugsweise stutzenartig ausgebildet und weisen nicht näher bezeichnete Außennuten zur Aufnahme von Dichtungselementen, wie O-Ringe, auf.

Die Verbindungsteile 42, 44 können mit jeweiligen Fluidleitungen 32, 34 durch Reibschweißen verbunden werden. Zu diesem Zweck weisen die im Wesentlichen identisch ausgebildeten Leitungsanschlussabschnitte einen Innenstutzen und einen konzentrisch sich hierzu erstreckenden Außenstutzen auf, zwischen denen ein Ende der zugeordneten Fluidleitung einführbar ist.

Ferner weisen die Verbindungsteile 42, 44 jeweils nicht näher bezeichnete Mittel auf, an denen ein Werkzeug eingreifen kann, um das jeweilige Verbindungsteil 42, 44 in Relativrotation zu der Fluidleitung zu versetzen. Hierdurch wird in dem Bereich zwischen dem Innen- und dem Außenstutzen und dem eingeführten Ende der Fluidleitung aufgrund von Reibung eine solche Wärme erzeugt, dass die einander gegenüberliegenden Oberflächen anschmelzen und auf diese Weise eine stoffschlüssige, umlaufende (und folglich dichtende) Verbindung zwischen der Fluidleitung 32, 34 und dem jeweiligen Leitungsanschlussabschnitt 46 erzielbar ist.

Anschließend können die an den Fluidleitungen 32, 34 angebrachten Verbindungsteile 42, 44 zur Montage zunächst miteinander ausgerichtet werden. Hierbei wird der ringförmige Vorsprung 60 des ersten Verbindungsteils 42 auf die Grundplatte 70 des zweiten Verbindungsteils 44 aufgesetzt, und zwar derart, dass der Vorsprung 60 von dem im Querschnitt halbkreisförmigen Randabschnitt 73 umschlossen wird. Dabei greift die Positioniernase 86 in die Positionieröffnung 76, so dass die relative Drehlage zwischen den Verbindungsteilen 42, 44 eingerichtet wird, wie in Figur 4 dargestellt ist. Durch die Halteklammern 41 kann die Leitungsanordnung 30 dann insgesamt so fixiert werden, dass sich die Verbindungsteile 42, 44 nicht mehr voneinander lösen, bevor die so gebildete Verbindungsanordnung 36 mittels einer Schraube 56 an dem Gehäuse 40 festgelegt wird.

Die erfindungsgemäße Leitungsanordnung 30 weist bevorzugt keine Bauteile aus Metall auf (bis auf etwaige Spannbauteile der Quick-Konnektoren der Anschlussanordnung 38), so dass die Leitungsanordnung mit einem geringen Gewicht hergestellt werden kann.

Die Verbindungsteile 42, 44 und die Fluidleitungen 32, 34 sind vorzugsweise aus thermoplastischem Material hergestellt und über deren gesamten Umfang stoffschlüssig miteinander verbunden. Demzufolge kann eine hohe Dichtheit im Bereich der Verbindungsanordnung 36 erzielt werden.

Zudem können die Fluidleitungen 32, 34 aufgrund ihrer Materialeigenschaften Vibrationen aufnehmen, die von dem Getriebe 20 in die Leitungsanordnung 30 eingeleitet werden. Aufgrund des geringen Gewichtes ist es nicht notwendig, separate elastische Dämpfungselemente oder Ähnliches vorzusehen. Vielmehr können die Fluidleitungen 32, 34 trotz einer starren Festlegung des Ölkühlers 28 an der Karosserie 12 als im Wesentlichen starr vorgeformte Kunststoffleitungen ausgeführt werden, die aufgrund ihrer Länge die notwendige Elastizität besitzen.

Ferner weist die Leitungsanordnung 30 jedenfalls im Bereich der Verbindungsanordnung 36 keine beweglichen Elemente auf, die potentielle Leckagestellen darstellen könnten. Aufgrund der Tatsache, dass die Fluidleitungen 32, 34 durchgehend aus dem gleichen Material hergestellt sind, lassen sich diese vergleichsweise einfach herstellen, beispielsweise aus einem Copolyamid.

Die Fluidleitungen 32, 34 sind generell als "starr vorgeformte" Leitungen ausgeführt, die eine vorbestimmte Lage im Raum einnehmen, die an die jeweilige Einbausituation in dem Kraftfahrzeug angepasst ist. Aufgrund der Länge und der generell elastischen Eigenschaften des thermoplastischen Kunststoffes können diese Fluidleitungen 32, 34 dennoch die oben erwähnten Vibrationen des Getriebes 20 aufnehmen.

Durch die Stege 74 bzw. 84 wird eine hohe Biegesteifigkeit erzielt, die hinreichend ist, um die Gehäuseanschlussabschnitte 48 auch bei Befestigung mit nur einer einzelnen Schraube 56 sicher an dem Gehäuse 40 befestigt zu können, auch wenn aufgrund eines Fluiddruckes, der beispielsweise auf den Krümmungsabschnitt 90 wirkt, ein Biegemoment um den Befestigungsabschnitt 54 herum ausgeübt wird (insbesondere bei Druckspitzen).

## Patentansprüche

1. Leitungsanordnung (30) für ein unter Druck stehendes Fluid, insbesondere zur Verbindung eines Getriebes (20) mit einem Ölkühler (28), mit einer ersten Fluidleitung (32) und mit einer zweiten Fluidleitung (34), die mittels einer Verbindungsanordnung (36) mit einem Gehäuse (40) wie einem Getriebegehäuse verbindbar sind, wobei
die Verbindungsanordnung (36) ein erstes Verbindungsteil (42) und ein zweltes Verbindungsteil (44) aufweist, die jeweils einen Durchgangskanal (50) aufweisen, wobei die Verbindungsteile (42, 44) aus Kunststoff hergestellt sind, wobei die Fluidleitungen (32, 34) aus Kunststoff hergestellt sind, und wobei das erste Kunststoff-Verbindungsteil (42) und die erste Kunststoff-Fluidleitung (32) sowie das zweite Kunststoff-Verbindungsteil (44) und die zweite Kunststoff-Fluidleitung (34) jeweils stoffschlüssig miteinander verbunden sind,
wobei die Verbindungsteile (42, 44) jeweils wenigstens einen Gehäuseanschlussabschnitt (48), wenigstens einen Leitungsanschlussabschnitt (46), der mit dem Gehäuseanschlussabschnitt (48) über den Durchgangskanal (50) verbunden ist, und wenigstens einen Befestigungsabschnitt (54) aufweisen, wobei die Befestigungsabschnitte (54) derart miteinander ausrichtbar sind, dass die Verbindungsteile (42, 44) mittels eines einzelnen Befestigungselementes (56) an dem Gehäuse (40) befestigbar sind.

2. Leitungsanordnung nach Anspruch 1, **dadurch gekennzeichnet, dass** das Kunststoff-Verbindungsteil (42, 44) und die Kunststoff-Fluidleitung (32, 34) durch Reibschweißen miteinander verbunden sind.

3. Leitungsanordnung nach Anspruch 1 oder 2, **dadurch gekennzeichnet, dass** wenigstens eines der Verbindungsteile (42, 44) zwischen dem Gehäuseanschlussabschnitt (48) und dem Befestigungsabschnitt (54) wenigstens einen die Biegesteifigkeit erhöhenden Steg (74) aufweist.

4. Leitungsanordnung nach einem der Ansprüche 1 bis 3, **dadurch gekennzeichnet, dass** eine Anschlussachse (72) des Gehäuseanschlussabschnittes (48) von wenigstens einem der Verbindungsteile (42, 44) parallel zu einer Befestigungsachse (94) des zugehörigen Befestigungsabschnittes (54) ausgerichtet ist.

5. Leitungsanordnung nach einem der Ansprüche 1 bis 4, **dadurch gekennzeichnet, dass** eine Leitungsachse (92) des Leitungsanschlussabschnittes (46) von wenigstens einem der Verbindungsteile (42, 44) winklig zu einer Anschlussachse (72) des zugehörigen Gehäuseanschlussabschnittes (48) ausgerichtet ist.

6. Leitungsanordnung nach einem der Ansprüche 1 bis 5, **dadurch gekennzeichnet, dass** eines der Verbindungsteile (42, 44) einen Vorsprung (60; 86) und das andere Verbindungsteil eine Aussparung (62; 76) aufweist, in die der Vorsprung (60; 86) greift.

7. Leitungsanordnung nach einem der Ansprüche 1 bis 6, **dadurch gekennzeichnet, dass** wenigstens eine der Fluidleitungen (32, 34) von der Verbindungsanordnung (36) bis hin zu einer Anschlussanordnung (38), mittels der die Fluidleitung (32, 34) an ein weiteres Gehäuse (28) wie einen Ölkühler anschließbar ist, durchgehend aus einem einheitlichen Kunststoffmaterial hergestellt ist.

8. Leitungsanordnung nach Anspruch 7, **dadurch gekennzeichnet, dass** das Kunststoffmaterial ein wärmebeständiger und druckbelastbarer thermoplastischer Kunststoff ist.

9. Kraftfahrzeug mit einer Leitungsanordnung nach einem der Ansprüche 1 bis 8, insbesondere zur Leitung von Getriebeöl zwischen einem Getriebe (20) und einem Ölkühler (28).

10. Verfahren zur Herstellung einer Leitungsanordnung (30) nach einem der Ansprüche 1 bis 8, mit den Schritten:
- Bereitstellen eines Verbindungsteils (42) aus thermoplastischem Kunststoff;
- Bereitstellen einer Fluidleitung (32) aus thermoplastischem Kunststoff,
- stoffschlüssiges Verbinden des Verbindungsteils (42) und der Fluidleitung (32) durch Reibschweißen.

11. Verfahren nach Anspruch 10, wobei in dem Reibschweißschritt das Verbindungsteil (42) um eine Leitungsachse (92) herum rotiert wird.

12. Verfahren nach Anspruch 10 oder 11, wobei ein zweites Verbindungsteil (44) ebenfalls durch Reibschweißen mit einer zweiten Fluidleitung (34) verbunden wird und wobei das erste und das zweite Verbindungselement (42, 44) derart zusammengesetzt werden, dass sie mittels eines einzelnen Befestigungselementes (56) an einem Gehäuse (40) befestigbar sind.

## Claims

1. Conduit arrangement (30) for a pressurized fluid, in particular for connecting a gearbox (20) to an oil cooler (28), comprising a first fluid conduit (32) and comprising a second fluid conduit (34) which can be connected to a housing (40), such as a gearbox housing, by means of a connecting arrangement (36), wherein the connecting arrangement (36) has a first connecting part (42) and a second connecting part (44) which have a respective through-passage (50), wherein the connecting parts (42, 44) are made of plastic, wherein the fluid conduits (32, 34) are made of plastic, and wherein the first plastic connecting part (42) and the first plastic fluid conduit (32) are integrally connected to one another, wherein the second plastic connecting part (44) and the second plastic connecting fluid conduit (34) are integrally connected to one another,
the connecting parts (42, 44) each have at least one housing connection section (48), at least one conduit connection section (46) which is connected to the housing connection section (48) via the through-passage (50), and at least one fastening section (54), wherein the fastening sections (54) can be aligned with one another in such a way that the connecting parts (42, 44) can be fastened to the housing (40) by means of a single fastening element (56).

2. Conduit arrangement according to Claim 1, **characterized in that** the plastic connecting part (42, 44) and the plastic fluid conduit (32, 34) are connected to one another by friction welding.

3. Conduit arrangement according to Claim 1 or 2, **characterized in that** at least one of the connecting parts (42, 44) has at least one web (74) between the housing connection section (48) and the fastening section (54), said web (74) increasing the bending resistance.

4. Conduit arrangement according to one of Claims 1 to 3, **characterized in that** a connection axis (72) of the housing connection section (48) of at least one of the connecting parts (42, 44) is oriented in parallel with a fastening axis (94) of the associated fastening section (54).

5. Conduit arrangement according to one of Claims 1 to 4, **characterized in that** a conduit axis (92) of the conduit connection section (46) of at least one of the connecting parts (42, 44) is oriented at an angle to a connection axis (72) of the associated housing connection section (48).

6. Conduit arrangement according to one of Claims 1 to 5, **characterized in that** one of the connecting parts (42, 44) has a projection (60; 86) and the other connecting part has a recess (62; 76) in which the projection (60; 86) engages.

7. Conduit arrangement according to one of Claims 1 to 6, **characterized in that** at least one of the fluid conduits (32, 34) from the connecting arrangement (36) right up to a connection arrangement (38), by means of which the fluid conduit (32, 34) can be connected to a further housing (28), such as an oil cooler, is made throughout of a uniform plastic material.

8. Conduit arrangement according to Claim 7, **characterized in that** the plastic material is a heat-resistant and pressure-resistant thermoplastic.

9. Motor vehicle having a conduit arrangement according to one of Claims 1 to 8, in particular for conducting gearbox oil between a gearbox (20) and an oil cooler (28).

10. Method of producing a conduit arrangement (30) according to one of Claims 1 to 8, comprising the steps:
- providing a connecting part (42) made of thermoplastic;
- providing a fluid conduit (32) made of thermoplastic;
- integrally connecting the connecting part (42) and the fluid conduit (32) by friction welding.

11. Method according to Claim 10, wherein the connecting part (42) is rotated about a conduit axis (92) during the friction welding step.

12. Method according to Claim 10 or 11, wherein a second connecting part (44) is connected to a second fluid conduit (34), likewise by friction welding, and wherein the first and the second connecting elements (42, 44) are assembled in such a way that they can be fastened to a housing (40) by means of a single fastening element (56).

## Revendications

1. Dispositif de conduite (30) pour un fluide sous pression, en particulier pour le raccordement d'une boîte de vitesses (20) avec un refroidisseur d'huile (28), avec une première conduite de fluide (32) et avec une deuxième conduite de fluide (34), qui peuvent être raccordées au moyen d'un dispositif de raccordement (36) à un boîtier (40) comme un carter de boîte de vitesses, dans lequel
le dispositif de raccordement (36) présente une première pièce de raccordement (42) et une deuxième pièce de raccordement (44), qui présentent respectivement un canal de passage (50), dans lequel les pièces de raccordement (42, 44) sont fabriquées en matière plastique, dans lequel les conduites de fluide (32, 34) sont fabriquées en matière plastique, et dans lequel la première pièce de raccordement en matière plastique (42) et la - première conduite de fluide en matière plastique (32) ainsi que la deuxième pièce de raccordement en matière plastique (44) et la deuxième conduite de fluide en matière plastique (34) sont respectivement assemblées l'une à l'autre en continuité de matière,
dans lequel les pièces de raccordement (42, 44) présentent respectivement au moins une partie de raccord de boîtier (48), au moins une partie de raccord de conduite (46), qui est raccordée à la partie de raccord de boîtier (48) par le canal de passage (50), et au moins une partie de fixation (54), dans lequel les parties de fixation (54) peuvent être agencées l'une avec l'autre de telle manière que les pièces de raccordement (42, 44) puissent être fixées au boîtier (40) au moyen d'un seul élément de fixation (56).

2. Dispositif de conduite selon la revendication 1, **caractérisé en ce que** la pièce de raccordement en matière plastique (42, 44) et la conduite de fluide en matière plastique (32, 34) sont assemblées l'une à l'autre par soudage par friction.

3. Dispositif de conduite selon la revendication 1 ou 2, **caractérisé en ce qu'**au moins une des pièces de raccordement (42, 44) présente, entre la partie de raccord de boîtier (48) et la partie de fixation (54), au moins une nervure (74) augmentant la rigidité à la flexion.

4. Dispositif de conduite selon l'une quelconque des revendications 1 à 3, **caractérisé en ce qu'**un axe de raccord (72) de la partie de raccord de boîtier (48) d'au moins une des pièces de raccordement (42, 44) est orienté parallèlement à un axe de fixation (94) de la partie de fixation correspondante (54).

5. Dispositif de conduite selon l'une quelconque des revendications 1 à 4, **caractérisé en ce qu'**un axe de conduite (92) de la partie de raccord de conduite (46) d'au moins une des pièces de raccordement (42, 44) est orienté en oblique par rapport à un axe de raccord (72) de la partie de raccord de boîtier correspondante (48).

6. Dispositif de conduite selon l'une quelconque des revendications 1 à 5, **caractérisé en ce qu'**une des pièces de raccordement (42, 44) présente une saillie (60; 86) et l'autre pièce de raccordement présente un évidement (62; 76), dans lequel la saillie (60; 86) s'engage.

7. Dispositif de conduite selon l'une quelconque des revendications 1 à 6, **caractérisé en ce qu'**au moins une des conduites de fluide (32, 34) est fabriquée d'une manière ininterrompue en une matière plastique unique depuis le dispositif de raccordement (36) jusqu'à un dispositif de raccord (38), au moyen duquel la conduite de fluide (32, 34) peut être raccordée à un autre boîtier (28) comme un refroidisseur d'huile.

8. Dispositif de conduite selon la revendication 7, **caractérisé en ce que** la matière plastique est une matière plastique thermoplastique résistant à chaud et résistant à la pression.

9. Véhicule automobile avec un dispositif de conduite selon l'une quelconque des revendications 1 à 8, en particulier pour conduire de l'huile de boîte de vitesses entre une boîte de vitesses (20) et un refroidisseur d'huile (28).

10. Procédé de fabrication d'un dispositif de conduite (30) selon l'une quelconque des revendications 1 à 8, avec les étapes:
- préparation d'une pièce de raccordement (42) en matière plastique thermoplastique;
- préparation d'une conduite de fluide (32) en matière plastique thermoplastique;
- assemblage en continuité de matière de la pièce de raccordement (42) et de ta conduite de fluide (32) par soudage par friction.

11. Procédé selon la revendication 10, dans lequel on fait tourner la pièce de raccordement (42) autour d'un axe de conduite (92) pendant l'étape de soudage par friction.

12. Procédé selon la revendication 10 ou 11, dans lequel on assemble une deuxième pièce de raccordement (44) également par soudage par friction à une deuxième conduite de fluide (34) et dans lequel le premier et le deuxième éléments de raccordement (42, 44) sont réunis l'un à l'autre de telle manière qu'ils puissent être fixés à un boîtier (40) au moyen d'un seul élément de fixation (56).
